# EUROPEAN PATENT SPECIFICATION

(11) **EP 2 732 623 B1**
(45) Date of publication and mention of the grant of the patent: **06.03.2019**
(21) Application number: 12735023.9
(22) Date of filing: 12.06.2012
(51) Int. Cl.: H04N 7/167, H04N 21/2343, H04N 21/2347

(54) **SOFTWARE DRM OFFLINE PURCHASE**
OFFLINE-KAUF VON SOFTWARE-DRM
ACHAT HORS LIGNE DE GESTION DES DROITS NUMÉRIQUES (DRM) DE LOGICIEL

(30) Priority: 12.07.2011 GB 201111905
(43) Date of publication of application: 21.05.2014
(73) Proprietor: Synamedia Limited, Staines, Middlesex TW18 4EX (GB)
(72) Inventor: SOLOW, Hillel, 99543 Beit Shemesh (IL)
(74) Representative: Warren, Caroline Elisabeth
(86) International application number: PCT/IB2012/052960
(87) International publication number: WO 2013/008109

(56) References cited:
- EP-A1- 1 777 639
- EP-A2- 1 189 432
- WO-A1-00/31964
- US-A1- 2001 037 464

## Description

### FIELD OF THE INVENTION

The present invention relates to methods of content protection.

### BACKGROUND OF THE INVENTION

In digital rights management (DRM) systems there is a tradeoff between cost / complexity and functionality / security. Some DRM rules are difficult to enforce at a client device without expensive and/or complex solutions. Often, these DRM rules can be better enforced using an online connection to the Internet.

Published US Patent Application 2007/20070240229 of Yoon et al. describes a method and apparatus for importing content having plurality of parts. A digital content protection apparatus and method for digital rights management (DRM) are provided in which a content file including a plurality of content parts is imported such that a header is included which stores location information required for decoding each of the content parts. Therefore, the number of content parts constituting the content file can be recognized, and a license that is required for the use of each of the content parts can be acquired by analyzing header information without necessitating the parsing of the transport packets of the content file.

Published PCT Application WO 02/39206 of Citala Ltd. describes electronic transfer, development; handling and charging of electronic book (eBook) loaning and selling. The e-Book loaning structure and user interface handling is suggested. The means to enhancing the eBook reading experience is suggested via various novel means including live electronic maps and drawings which are text related, moving images (pseudo-movie like) related to text update etc. In addition a novel concept of updating the e-books while you read is introduced: where the user is able to change and update the content of the eBook giving him an intimately new experience in reading eBooks and Books in general. The e-Book reader is able to sell or loan parts of the eBook he obtained, whether by purchasing or borrowing. Further he may be actively stimulated to loan or sell the book he has, via a very sophisticated royalty system where it becomes beneficial for both the owner of the eBook and the reader to cause others to read it too. Finally, the user interface of the eBooks, and transfer mechanisms of the eBook and related media, between the various providers and consumers is given, completing the picture.

Published European Patent Application EP 1330728 of Discovery Communications, Inc. describes a method for virtual on-demand electronic books. The system provides a means for on-demand and virtual on-demand delivery of electronic books. Specified electronic books may be broadcast to a set of subscribers. Alternatively, a first section of the specified electronic books may be broadcast. A second section of each of the electronic books is then available for later delivery, upon order by a subscriber. The second sections, as well as first sections, and true on-demand electronic books may be loaded into one or more queues. The queues may then be emptied based on a priority model. Electronic books in an on-demand queue may be given priority for delivery over electronic books in other queues.

Patent document WO 00/31964 discloses a method in which an image file is partitioned in a plurality of sections where each section may be encrypted with an individual encryption method and keyword.

Additionally, the following published Patents and Patent Applications are believed to reflect the state of the art:
US 2003/187954 of Wen, et al.;
US 2002/073177 of Clark, et al;
US 2007/0083473 of Farruga, et al.;
US 2010/0017626 of Sato, et al.;
EP 1189432 of Bhattacharya, et al.; and
EP 1990976 of Fasoli, et al.

### SUMMARY OF THE INVENTION

In general, a system designer must typically choose whether the system can support a certain business model and use case. Typically, such a decision is made, at least in part, by weighing the needs of security against cost and functionality.

One example of this is the support for offline purchase of a content item, such as, but not limited to, an e-book, an electronic magazine, or a video clip or movie. Commonly, purchasing content that has already been pushed to a device can be done securely either if the device is connected to a network at the time of purchase, or if the device has a highly secure DRM module such as a smartcard.

As the costs of hardware DRM are often prohibitive, it might be concluded that there is no feasible way to support offline purchase, such as, and without limiting the generality of the foregoing, the ability to buy a preloaded book on an e-reader while on an airplane. This invention aims to provide a more reasonable solution for this type of problem.

Similarly, models based on some notion of "secure time" may be difficult to enforce securely while offline. If a video is available for viewing for 24 hours, a hacker may easily change the time on a device. Online playback might be a more effective way to enforce the time limits, but would preclude offline use.

Accordingly, at least two different DRM schemes are applied to at least two distinct parts of the content item file, the at least two different DRM schemes having the same business rules.

For example and without limiting the generality of the foregoing, a book may be divided into two sections. The first section may be protected using DRM Scheme A, which is a software DRM scheme, that is processed entirely offline. The second section may be protected with DRM Scheme B, which requires a connection to the server.

Both of the two DRM schemes are provided with the same business rule, "offline purchase", but in order to actually generate a key to open the section, each one of the two DRM schemes does different things. In this case, a user can purchase an e-book while on a plane, and the first 19 chapters of the e-book will be immediately readable, but the rest of the e-book would only be readable only once the user was off the plane.

A hacker could, if sufficiently motivated, find a way to prevent the device from later reporting the purchase. However, the final chapters of the e-book are not accessible offline. After agreeing to the purchase, the second DRM scheme would need to connect to a license server to get the content key.

There is thus provided in accordance with an embodiment of the present invention a system for protecting content according to claim 1.

Further in accordance with an embodiment of the present invention a decryption key which is able to decrypt a more securely encrypted decryption key is also able to decrypt a less securely encrypted decryption key.

Still further in accordance with an embodiment of the present invention a decrypted encryption key which, when encrypted, is more securely encrypted, is also able to decrypt a segment of the content item which is able to be decrypted by a decrypted encryption key which, when encrypted, is less securely encrypted.

Additionally in accordance with an embodiment of the present invention the first key which is less securely encrypted is accessible with fewer constraints than the second key.

Moreover in accordance with an embodiment of the present invention the decryptor and the second decryptor comprise the same decryptor.

There is also provided in accordance with another embodiment of the present invention a method for protecting content according to claim 9.

### BRIEF DESCRIPTION OF THE DRAWINGS

The present invention will be understood and appreciated more fully from the following detailed description, taken in conjunction with the drawings in which:
Fig. 1 is a simplified pictorial illustration depicting the use of a device comprising a system for content distribution constructed and operative in accordance with an embodiment of the present invention;
Fig. 2 is a simplified depiction is a simplified depiction of a method of production of an exemplary content item file for use in the system of Fig. 1;
Fig. 3 is a simplified depiction of one embodiment of the exemplary content item file for use in the system of Fig. 1;
Fig. 4 is a simplified depiction of another embodiment of the exemplary content item file for use in the system of Fig. 1; and
Fig. 5 is a simplified flowchart of an exemplary method of operation of the system of Fig. 1.

### DETAILED DESCRIPTION OF AN EMBODIMENT

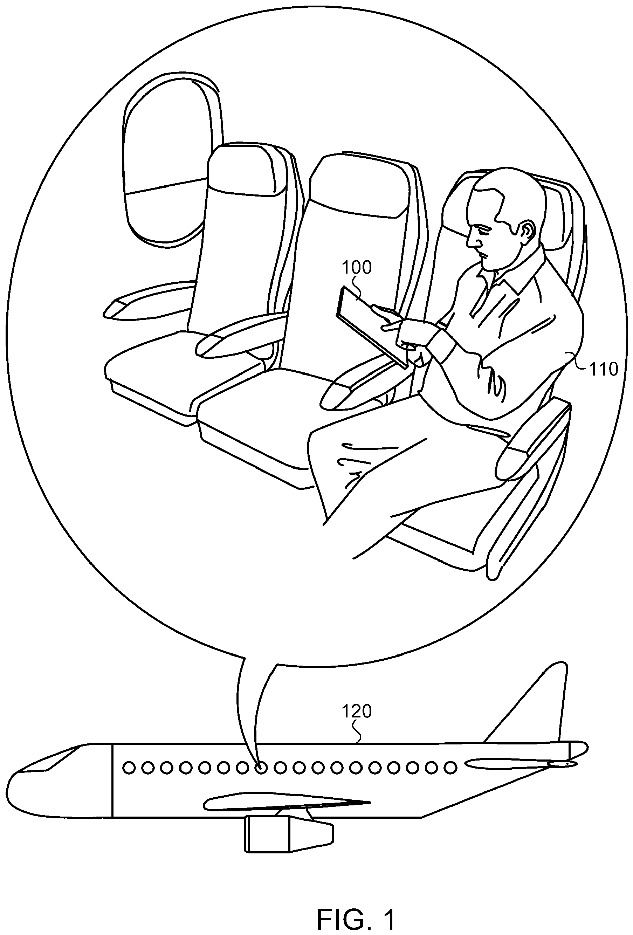

Reference is now made to Fig. 1, which is a simplified pictorial illustration depicting the use of a device 100 comprising a system for content distribution constructed and operative in accordance with an embodiment of the present invention. Fig. 1 depicts a person 110 seated on an airplane 120 holding the device 100, the device 100 comprising a system for consuming content. Nonlimiting examples of devices 100 which comprise systems for consuming content include e-book readers, smart phones, tablet computing devices, and so forth. Content to be consumed may include e-books, electronic magazines, video clips, and so forth.

It is appreciated that the device 100 comprises hardware and software as is known in the art, the hardware and software including, but not limited to, a processor, a storage, memory, encryption and decryption mechanisms, and so forth.

The person 110 depicted in Fig. 1 is able to purchase content for use on the device 100 during a flight of airplane 120. When the airplane 120 is in flight, typically the mechanism by which the person 100 executes the purchase of the content is unable to contact a server in order to validate the credentials of the person 100 purchasing the content. Thus, the mechanism by which the person 100 executes the purchase of the content is not able to complete the sale of the content. Accordingly, the purchase is arranged so that the person purchases a DRM protected content item. However, the DRM protection is arranged so that a portion of the DRM protected content item may not be consumed by the person (i.e. will not display properly on the device) until the sale is completed.

Accordingly, a DRM license is delivered to the device 100 along with the content item at the time the purchase is made. The content license comprises multiple DRM schemes but only a single business rule. For example and without limiting the generality of the foregoing, the single business rule might be "off-line purchase". Two decryption keys would be comprised in the license. Each of the decryption keys would be encrypted within the license. Typically, one of the two decryption keys would be encrypted in a more secure fashion relative to the encryption applied to the second decryption key.

For example and without limiting the generality of the foregoing, a first decryption key might be encrypted so that the first decryption key is able to be decrypted by a decryption key comprised in the device itself. A second, more securely encrypted decryption key might require a decryption key which is comprised on an external hardware device, such as a smart card. The smart card could either be inserted in the device in order to utilize the decryption key comprised thereon, or, the smart card might be wirelessly communicating with the device, enabling access to the decryption key, thereby enabling the first decryption key to be decrypted. A third, still more securely encrypted decryption key might require a number of pieces of a secret be imparted to the device by neighboring devices, as is known in the art. A fourth yet more securely encrypted decryption key might require an actual connection to a server which would provide the key needed to decrypt the fourth encrypted decryption key.

Different portions of the content item are encrypted according to different encryption keys, as is discussed below. Thus, in the case where the person purchases the content item while on the airplane 120, a first portion of the content item would be able to be decrypted by a first decryption key, and access to that key (i.e. the decryption key needed to decrypt the first decryption key) would be granted immediately upon purchase of the content item (for instance, the decryption key needed to decrypt the first decryption key would be found on the person's device).

When the person 100 arrives at his destination and leaves the airplane 120, the mechanism by which the person 100 executes the purchase of the content is able to contact the server in order to complete the sale of the content item. Upon completion of the sale, the device receives the decryption key needed to decrypt the second decryption key which is needed to decrypt the second portion of the content.

Having now given an overview of the present invention, the discussion herein now turns to details of implementation and examples of various embodiments.

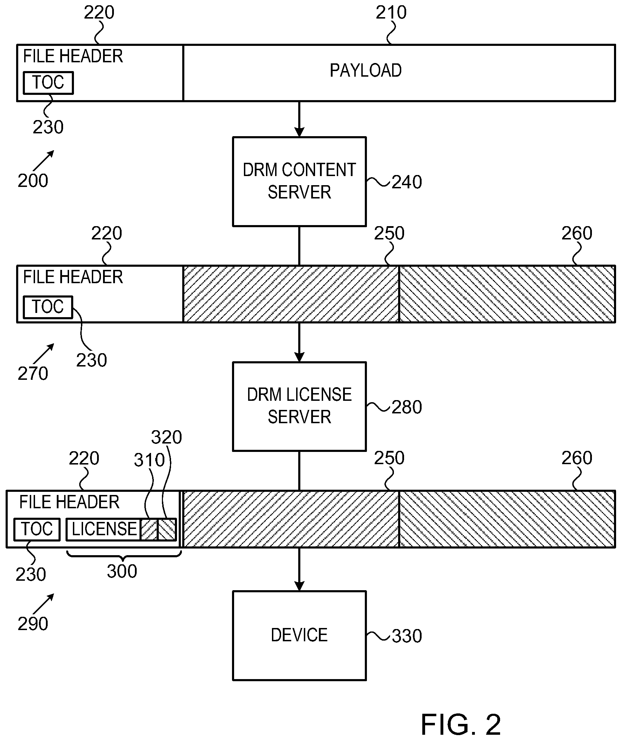

Reference is now made to Fig. 2, which is a simplified depiction of a method of production of an exemplary content item file 200 for use in the system of Fig. 1. The exemplary content item file 200 typically comprises a payload 210, comprising the content portion of the content item file itself. The content item file 200 also comprises a file header 220. The file header typically comprises information about the file, including an index of significant locations within the payload 210. The index is depicted and denoted herein as a table of contents, or TOC 230. Significant locations within the payload 210 might vary depending on the nature of the payload 210. For example and without limiting the generality of the foregoing, if the payload 210 comprises an e-book, the TOC 230 might be an index of starting locations of the chapters of the e-book. Alternatively, if the payload 210 comprises a magazine, the TOC 230 might be an index of starting locations of the articles of the magazine. Further alternatively, if the payload 210 comprises a video, such as a movie, the TOC 230 might be an index of starting locations of the scenes of the movie.

Many variants of DRM schemes exist, and companies often employ different schemes for different systems. For example, NDS Limited, One London Road, Staines, Middlesex TW18 4EX, has various commercially available DRM schemes, among them: a removable hardware based DRM scheme using a smartcard, a non-removable key-ladder based DRM scheme (VGS), offline software based DRM schemes and online software based DRM schemes.

Various different DRM schemes are capable of securely implementing some, but often not all, of the desirable business models. For example, the following table might depict the ability of various schemes to enforce certain business models.

| | | **DRM SCHEME** | | | |
|---|---|---|---|---|---|
| | | **Smartcard** | **VGS** | **Online Software** | **Offline Software** |
| **BUSINESS MODEL** | **Online Purchase** | Yes | Yes | Yes | Yes |
| | **Rental** | Yes | No | Yes | Weak |
| | **Gifting** | Yes | No | Weak | Weak |
| | **Offline Purchase** | Yes | No | Yes | No |

The content item file 200 supports multiple sections. Different DRM and different encryption is applied to each of the multiple sections of the content item file 200. For example and without limiting the generality of the foregoing, a file containing a video stream could have a "table of contents" section indicating the start and end indexes for each section of the video. Another example, an e-book (EPUB) file used for delivering electronic books would contain a separate sub-file for each chapter, or plurality of chapters, and thus each chapter, or plurality of chapters, could be protected differently.

The content item file 200 is input into a DRM content server 240. The DRM content server 240 partitions the content item file 200 into one or more sections 250, 260. In one embodiment of the present invention the content item file 200 is linearly portioned. Linear partitioning works well for content which is typically consumed linearly, such as a novel (without limiting the generality of the foregoing). In such a case, a typical approach would be to enable a weaker DRM scheme for the first section 250 of the payload 210 of the content item file 200. The second section 260 of the payload 210 of the content item file 200 would then be protected by a stronger DRM scheme.

Other types of content item file 200 might lend themselves to different partitioning, such as by media subtype, for example and without limiting the generality of the foregoing, a magazine purchased offline, might be displayed so that only the articles can be read, but the images may not be seen, or visa-versa.

The partitioned output 270 of the DRM content server 240 is input into a DRM license server 280. The DRM license server 280 generates a dual-license 300. The license 300 encodes the business rule for two (or more) DRM schemes. The license 300 also comprises encrypted decryption keys 310, 320 for each of the two (or more) DRM schemes and their associated encryption schemes.

The content item file 290 comprising the content license 300 is either pushed to the device or downloaded to the device 330 by the user.

The user chooses to use the content.
a. For the first section 250 of the payload 210, a first DRM scheme (for example and without limiting the generality of the foregoing, software DRM) is utilized. Accordingly, a first decryption key 310 is needed to decrypt the encrypted first section 250 of the payload 210 of the content item file 200. A decryption key is provided, on the basis of the off-line (and hence, incomplete) purchase, in order to decrypt the encrypted first decryption key 310. For example and without limiting the generality of the foregoing, the decryption key may be stored on the device 330 itself. Once decrypted, the first decryption key 310 is used to decrypt the encrypted first section 250 of the payload 210 of the content item file 200.
b. For the second section 260 of the payload 210, of the content item file 200, a second DRM scheme (e.g. smart card DRM) is utilized. Accordingly, a key other than the encrypted first decryption key 310, which is preferably more securely encrypted than the encrypted first decryption key 310 is needed. Upon establishing a session with the necessary server, or providing the necessary credentials (e.g. establishing a wireless communication session between a user's smart card and the user's device, or, alternatively, inserting the user's smart card into the user's device), enables accessing a decryption key which is needed in order to decrypt the encrypted second decryption key 320. Once decrypted, the second decryption key 320 is used to decrypt the encrypted second section 260 of the payload 210 of the content item file 200.

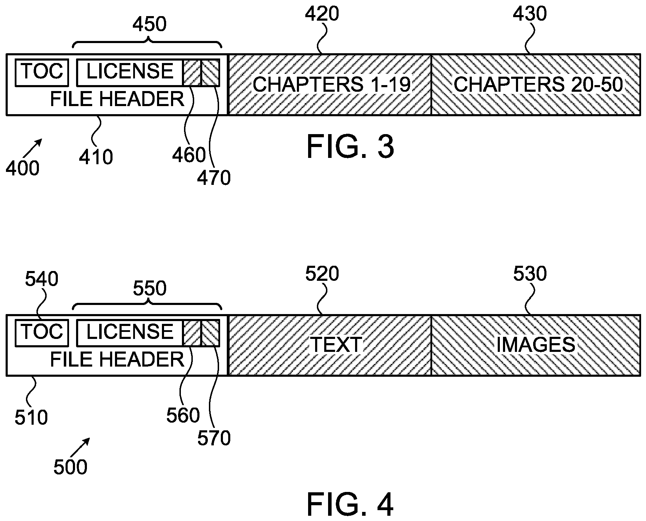

Reference is now made to Fig. 3, which is a simplified depiction of one embodiment of the exemplary content item file 400 for use in the system of Fig. 1. Fig. 3 depicts a content item file 400 which is optimally consumed linearly. As has already been discussed, the file, for example and without limiting the generality of the foregoing, a electronic book file, is delivered to the device 330, either by downloading the file or else, alternatively, a number of electronic book files can be pushed to the device an made available for offline purchase. The second portion of the payload (260 in Fig. 2) can only be purchased online or if the device 330 is in communication with a smart card (either wirelessly or the smart card is physically inserted in the device 330).

The content item file 400 comprises a file header 410 and is depicted as comprising two sections of the payload portion, chapters 1 - 19 420 and chapters 20 - 50 430. The file header 410 comprises a TOC 440, which, as described below, comprises the index of significant locations within the payload 210. For example and without limiting the generality of the foregoing, in the exemplary content item file 400 depicted in Fig. 3, the TOC 440 would comprise a list of the starting locations of chapter 1 and chapter 20. The starting locations of the other chapters would also be stored, but for the purposes of the present discussion, they are of less significance.

The content item file 400 file header 410 also comprises the DRM license 450, as discussed above. The DRM license 450 comprises two encrypted decryption keys 460, 470. The first of the two encrypted decryption keys, key 460, is required, when it is decrypted, to decrypt chapters 1 - 19 420 of the payload. The second of the two encrypted decryption keys, key 470, is required, when it is decrypted, to decrypt chapters 20 - 50 430 of the payload.

Reference is now made to Fig. 4, which is a simplified depiction of another embodiment of the exemplary content item file 500 for use in the system of Fig. 1. Fig. 4 depicts a content item file 500 which is optimally not consumed linearly, but in some other fashion (for example and without limiting the generality of the foregoing, a magazine, as discussed above). As has already been discussed the file, (i.e. the magazine file) might be provided to the device 330 for a one week preview. Some devices have a secure clock that the DRM system can rely on to determine if and when the one week has passed. Other devices, lacking a secure clock, might make the second portion of the payload (260 in Fig. 2) available only when the device 330 is online or if the device 330 is in communication with a smart card (either wirelessly or the smart card is physically inserted in the device 330).

The content item file 500 comprises a file header 510 and is depicted as comprising two sections of the payload portion, text 520 and images 530. The file header 510 comprises a TOC 540, which, as described below, comprises the index of significant locations within the payload 210. For example and without limiting the generality of the foregoing, in the exemplary content item file 500 depicted in Fig. 4, the TOC 540 would comprised a list of the starting locations of within the text 520.

The content item file 500 file header 510 also comprises the DRM license 550, as discussed above. The DRM license 550 comprises two encrypted decryption keys 560, 570. The first of the two encrypted decryption keys, key 560, is required, when it is decrypted, to decrypt the text 520 of the payload. The second of the two encrypted decryption keys, key 570, is required, when it is decrypted, to decrypt the images 530 of the payload.

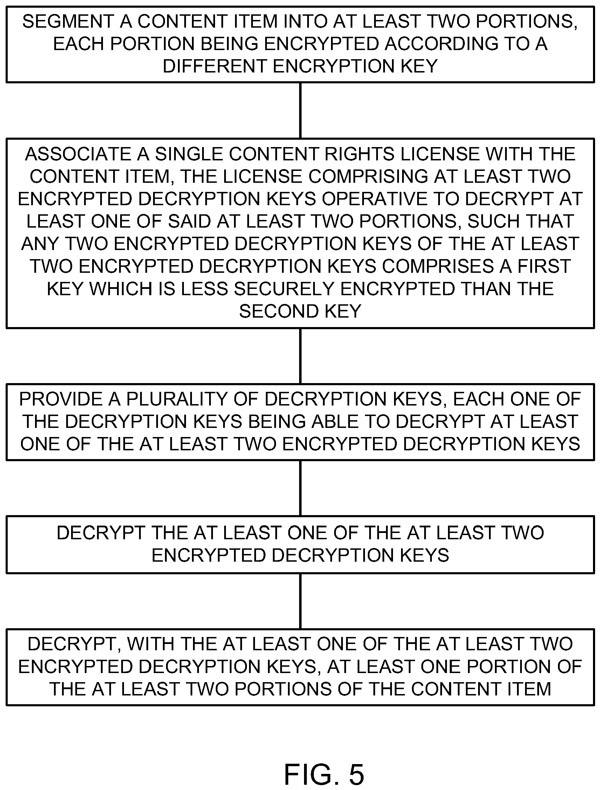

Reference is now made to Fig. 5, which is a simplified flowchart of an exemplary method of operation of the system of Fig. 1. Fig. 5 is believed to be self-explanatory in light of the above discussion.

It is appreciated that software components of the present invention may, if desired, be implemented in ROM (read only memory) form. The software components may, generally, be implemented in hardware, if desired, using conventional techniques. It is further appreciated that the software components may be instantiated, for example: as a computer program product; on a tangible medium; or as a signal interpretable by an appropriate computer.

It is appreciated that various features of the invention which are, for clarity, described in the contexts of separate embodiments may also be provided in combination in a single embodiment. Conversely, various features of the invention which are, for brevity, described in the context of a single embodiment may also be provided separately or in any suitable subcombination.

It will be appreciated by persons skilled in the art that the present invention is not limited by what has been particularly shown and described hereinabove. Rather the scope of the invention is defined by the appended claims

## Claims

1. A system for protecting and enabling offline purchase of a content item pre-loaded on a user device (100)(330), the system comprising:
a pre-loaded content item (200)(400)(500) which has been segmented into at least two portions (250, 260)(420, 430)(520, 530), each portion being encrypted according to a different encryption key;
a single content rights license (300)(450)(550) associated with the content item (200)(400)(500), the license (300)(450)(550) comprising at least two encrypted decryption keys operative to decrypt at least one of said at least two portions, such that any two encrypted decryption keys of the at least two encrypted decryption keys comprise a first key (310)(460)(560) which is less securely encrypted than the second key (320)(470)(570);
a plurality of decryption keys, each one of the decryption keys being able to decrypt at least one of the at least two encrypted decryption keys,
a decryptor for decrypting the at least one of the at least two encrypted decryption keys; and
a second decryptor for decrypting, with the at least one of the at least two encrypted decryption keys, at least one portion of the at least two portions (250, 260)(420, 430)(520, 530) of the content item (200)(400)(500);
wherein the first key (310)(460)(560) is decryptable by a decryption key comprised in the user device (100)(330) and the second key (320)(470)(570) requires a decryption key which is comprised on a server and decryption of the second key (320)(470)(570) requires a connection to the server, whereby a portion of the at least two portions (250, 260)(420, 430)(520, 530) requiring encryption by the second key (320)(470)(570) may not be consumed until a connection is established with the server.

2. The system according to claim 1 wherein a decryption key which is able to decrypt a more securely encrypted decryption key is also able to decrypt a less securely encrypted decryption key.

3. The system according to claim 1 or claim 2 wherein a decrypted encryption key which, when encrypted, is more securely encrypted, is also able to decrypt a segment of the content item (200)(400)(500) which is able to be decrypted by a decrypted encryption key which, when encrypted, is less securely encrypted.

4. The system according to any of claims 1 - 3 wherein the first key (310)(460)(560) which is less securely encrypted is accessible with fewer constraints than the second key (320)(470)(570).

5. The system according to any of claims 1 - 4 wherein the decryptor and the second decryptor comprise the same decryptor.

6. The system according to any of claims 1 - 5 wherein the single content rights license (300)(450)(550) comprises a single business rule of off-line purchase.

7. The system according to any of claims 1 - 6 wherein the single content rights license comprises a DRM license.

8. The system according to claim 7 wherein the DRM license comprises:
an offline software DRM scheme; an online software DRM scheme; a non-removable key ladder DRM scheme; and a removable hardware DRM scheme using a smart card.

9. A computer-implemented method for protecting and enabling offline purchase of a content item pre-loaded on a user device (100)(330), the method comprising:
segmenting a content item (200)(400)(500) into at least two portions (250, 260)(420, 430)(520, 530), each portion being encrypted according to a different encryption key;
associating a single content rights license (300)(450)(550) with the content item (200)(400)(500), the license (300)(450)(550) comprising at least two encrypted decryption keys operative to decrypt at least one of said at least two portions, such that any two encrypted decryption keys of the at least two encrypted decryption keys comprise a first key (310)(460)(560) which is less securely encrypted than the second key (320)(470)(570);
providing a plurality of decryption keys, each one of the decryption keys being able to decrypt at least one of the at least two encrypted decryption keys;
decrypting the at least one of the at least two encrypted decryption keys;
decrypting, with the at least one of the at least two encrypted decryption keys, at least one portion of the at least two portions (250, 260)(420, 430)(520, 530) of the content item (200)(400)(500);
wherein the first key (310)(460)(560) is decryptable by a decryption key comprised in the user device (100)(330) and the second key (320)(470)(570) requires a decryption key which is comprised on a server and decryption of the second key (320)(470)(570) requires a connection to the server, whereby a portion of the at least two portions (250, 260)(420, 430)(520, 530) requiring encryption by the second key (320)(470)(570) may not be consumed until a connection is established with the server.

## Patentansprüche

1. System zum Schützen und Ermöglichen des Offline-Kaufs eines auf einem Benutzergerät (100) (330) vorgeladenen Inhaltselements, wobei das System Folgendes umfasst:
ein vorgeladenes Inhaltselement (200) (400) (500), das in wenigstens zwei Teile (250, 260) (420, 430) (520, 530) segmentiert ist, wobei jeder Teil gemäß einem anderen Verschlüsselungsschlüssel verschlüsselt ist;
eine mit dem Inhaltselement (200) (400) (500) assoziierte Inhaltsrechte-Einzellizenz (300) (450) (550), wobei die Lizenz (300) (450) (550) wenigstens zwei verschlüsselte Entschlüsselungsschlüssel zum Entschlüsseln von wenigstens einem der genannten wenigstens zwei Teile umfasst, so dass beliebige zwei verschlüsselte Entschlüsselungsschlüssel der wenigstens zwei verschlüsselten Entschlüsselungsschlüssel einen ersten Schlüssel (310) (460) (560) umfassen, der weniger sicher verschlüsselt ist als der zweite Schlüssel (320) (470) (570);
eine Mehrzahl von Entschlüsselungsschlüsseln, wobei jeder der Entschlüsselungsschlüssel wenigstens einen der wenigstens zwei verschlüsselten Entschlüsselungsschlüssel entschlüsseln kann,
einen Entschlüsseler zum Entschlüsseln von wenigstens einem der wenigstens zwei verschlüsselten Entschlüsselungsschlüssel; und
einen zweiten Entschlüsseler zum Entschlüsseln, mit dem wenigstens einen der wenigstens zwei verschlüsselten Entschlüsselungsschlüssel, wenigstens eines Teils der wenigstens zwei Teile (250, 260) (420, 430) (520, 530) des Inhaltselements (200) (400) (500);
wobei der erste Schlüssel (310) (460) (560) mit einem Entschlüsselungsschlüssel entschlüsselt werden kann, der sich im Benutzergerät (100) (330) befindet, und der zweite Schlüssel (320) (470) (570) einen Entschlüsselungsschlüssel verlangt, der sich auf einem Server befindet, und das Entschlüsseln des zweiten Schlüssels (320) (470) (570) eine Verbindung mit dem Server erfordert, so dass ein Teil der wenigstens zwei Teile (250, 260) (420, 430) (520, 530), die eine Verschlüsselung durch den zweiten Schlüssel (320) (470) (570) verlangen, erst dann verbraucht werden kann, wenn eine Verbindung mit dem Server hergestellt ist.

2. System nach Anspruch 1, wobei ein Entschlüsselungsschlüssel, der einen sicherer verschlüsselten Entschlüsselungsschlüssel entschlüsseln kann, auch einen weniger sicher verschlüsselten Entschlüsselungsschlüssel entschlüsseln kann.

3. System nach Anspruch 1 oder Anspruch 2, wobei ein entschlüsselter Verschlüsselungsschlüssel, der, wenn verschlüsselt, sicherer verschlüsselt ist, auch ein Segment des Inhaltselements (200) (400) (500) entschlüsseln kann, das mit einem entschlüsselten Verschlüsselungsschlüssel entschlüsselt werden kann, der, wenn verschlüsselt, weniger sicher verschlüsselt ist.

4. System nach einem der Ansprüche 1 - 3, wobei der erste Schlüssel (310) (460) (560), der weniger sicher verschlüsselt ist, mit weniger Beschränkungen zugänglich ist als der zweite Schlüssel (320) (470) (570).

5. System nach einem der Ansprüche 1 - 4, wobei der Entschlüsseler und der zweite Entschlüsseler denselben Entschlüsseler umfassen.

6. System nach einem der Ansprüche 1 - 5, wobei die Inhaltsrechte-Einzellizenz (300) (450) (550) eine einzige Geschäftsregel für Offline-Käufe umfasst.

7. System nach einem der Ansprüche 1 - 6, wobei die Inhaltsrechte-Einzellizenz eine DRM-Lizenz umfasst.

8. System nach Anspruch 7, wobei die DRM-Lizenz Folgendes umfasst: ein Offline-Software-DRM-Schema; ein Online-Software-DRM-Schema; ein nicht entfernbares Schlüsselleiter-DRM-Schema; und ein entfernbares Hardware-DRM-Schema unter Verwendung einer Chipkarte.

9. Computerimplementiertes Verfahren zum Schützen und Ermöglichen von Offline-Käufen eines auf ein Benutzergerät (100) (330) vorgeladenen Inhaltselements, wobei das Verfahren Folgendes beinhaltet:
Segmentieren eines Inhaltselements (200) (400) (500) in wenigstens zwei Teile (250, 260) (420, 430) (520, 530), wobei jeder Teil gemäß einem anderen Verschlüsselungsschlüssel verschlüsselt ist;
Assoziieren eines Inhaltsrechte-Einzellizenz (300) (450) (550) mit dem Inhaltselement (200) (400) (500), wobei die Lizenz (300) (450) (550) wenigstens zwei verschlüsselte Entschlüsselungsschlüssel zum Entschlüsseln von wenigstens einem der genannten wenigstens zwei Teile umfasst, so dass beliebige zwei verschlüsselte Entschlüsselungsschlüssel der wenigstens zwei verschlüsselten Entschlüsselungsschlüssel einen ersten Schlüssel (310) (460) (560) umfassen, der weniger sicher verschlüsselt ist als der zweite Schlüssel (320) (470) (570);
Bereitstellen einer Mehrzahl von Entschlüsselungsschlüsseln, wobei jeder der Entschlüsselungsschlüssel wenigstens einen der wenigstens zwei verschlüsselten Entschlüsselungsschlüssel entschlüsseln kann;
Entschlüsseln des wenigstens einen der wenigstens zwei verschlüsselten Entschlüsselungsschlüssel;
Entschlüsseln, mit dem wenigstens einen der wenigstens zwei verschlüsselten Entschlüsselungsschlüssel, wenigstens eines Teils der wenigstens zwei Teile (250, 260) (420, 430) (520, 530) des Inhaltselements (200) (400) (500);
wobei der erste Schlüssel (310) (460) (560) mit einem Entschlüsselungsschlüssel entschlüsselt werden kann, der sich im Benutzergerät (100) (330) befindet, und der zweite Schlüssel (320) (470) (570) einen Entschlüsselungsschlüssel verlangt, der sich auf einem Server befindet, und das Entschlüsseln des zweiten Schlüssels (320) (470) (570) eine Verbindung mit dem Server erfordert, so dass ein Teil der wenigstens zwei Teile (250, 260) (420, 430) (520, 530), die eine Verschlüsselung durch den zweiten Schlüssel (320) (470) (570) verlangen, erst dann verbraucht werden kann, wenn eine Verbindung mit dem Server hergestellt ist.

## Revendications

1. Système pour protéger et permettre l'achat hors ligne d'un élément de contenu préchargé sur un dispositif utilisateur (100) (330), le système comprenant :
un élément de contenu préchargé (200) (400) (500) qui a été segmenté en au moins deux parties (250, 260) (420, 430) (520, 530), chaque partie étant chiffrée selon une clé de chiffrement différente ;
une licence de droits de contenu unique (300) (450) (550) associée à l'élément de contenu (200) (400) (500), la licence (300) (450) (550) comprenant au moins deux clés de déchiffrement chiffrées pouvant déchiffrer au moins l'une desdites au moins deux parties, de sorte que deux clés de déchiffrement chiffrées quelconques des au moins deux clés de déchiffrement chiffrées comprennent une première clé (310) (460) (560) qui est chiffrée de manière moins sécurisée que la seconde clé (320) (470) (570) ;
une pluralité de clés de déchiffrement, chacune des clés de déchiffrement pouvant déchiffrer au moins l'une des au moins deux clés de déchiffrement chiffrées,
un déchiffreur pour déchiffrer la au moins une des au moins deux clés de déchiffrement chiffrées ; et
un second déchiffreur pour déchiffrer, avec la au moins une des au moins deux clés de déchiffrement chiffrées, au moins une partie des au moins deux parties (250, 260) (420, 430) (520, 530) de l'élément de contenu (200) (400) (500) ;
dans lequel la première clé (310) (460) (560) est déchiffrable par une clé de déchiffrement comprise dans le dispositif utilisateur (100) (330) et la seconde clé (320) (470) (570) nécessite une clé de déchiffrement qui est comprise sur un serveur, et le déchiffrement de la seconde clé (320) (470) (570) nécessite une connexion au serveur, moyennant quoi une partie des au moins deux parties (250, 260) (420, 430) (520, 530) nécessitant un chiffrement par la seconde clé (320) (470) (570) peut ne pas être consommée tant qu'une connexion n'est pas établie avec le serveur.

2. Système selon la revendication 1, dans lequel une clé de déchiffrement qui permet de déchiffrer une clé de déchiffrement chiffrée de manière plus sécurisée permet également de déchiffrer une clé de déchiffrement chiffrée de manière moins sécurisée.

3. Système selon la revendication 1 ou la revendication 2, dans lequel une clé de chiffrement déchiffrée qui, lorsqu'elle est chiffrée, est chiffrée de manière plus sécurisée, permet également de déchiffrer un segment de l'élément de contenu (200) (400) (500) qui peut être déchiffré par une clé de chiffrement déchiffrée qui, lorsqu'elle est chiffrée, est chiffrée de manière moins sécurisée.

4. Système selon l'une quelconque des revendications 1 à 3, dans lequel la première clé (310) (460) (560) qui est chiffrée de manière moins sécurisée est accessible avec moins de contraintes que la seconde clé (320) (470) (570).

5. Système selon l'une quelconque des revendications 1 à 4, dans lequel le déchiffreur et le second déchiffreur comprennent le même déchiffreur.

6. Système selon l'une quelconque des revendications 1 à 5, dans lequel la licence de droits de contenu unique (300) (450) (550) comprend une règle commerciale unique d'achat hors ligne.

7. Système selon l'une quelconque des revendications 1 à 6, dans lequel la licence de droits de contenu unique comprend une licence DRM.

8. Système selon la revendication 7, dans lequel la licence DRM comprend : un système de DRM logiciel hors ligne ; un système de DRM logiciel en ligne ; un système de DRM à échelle de clé non amovible ; et un système de DRM matériel amovible utilisant une carte à puce.

9. Procédé mis en oeuvre par ordinateur pour protéger et permettre l'achat hors ligne d'un élément de contenu préchargé sur un dispositif utilisateur (100) (330), le procédé comprenant de :
segmenter un élément de contenu (200) (400) (500) en au moins deux parties (250, 260) (420, 430) (520, 530), chaque partie étant chiffrée selon une clé de chiffrement différente ;
associer une licence de droits de contenu unique (300) (450) (550) à l'élément de contenu (200) (400) (500), la licence (300) (450) (550) comprenant au moins deux clés de déchiffrement chiffrées pouvant déchiffrer au moins l'une desdites au moins deux parties, de sorte que deux clés de déchiffrement chiffrées quelconques des au moins deux clés de déchiffrement chiffrées comprennent une première clé (310) (460) (560) qui est chiffrée de manière moins sécurisée que la seconde clé (320) (470) (570) ;
fournir une pluralité de clés de déchiffrement, chacune des clés de déchiffrement pouvant déchiffrer au moins l'une des au moins deux clés de déchiffrement chiffrées,
déchiffrer la au moins une des au moins deux clés de déchiffrement chiffrées ;
déchiffrer, avec la au moins une des au moins deux clés de déchiffrement chiffrées, au moins une partie des au moins deux parties (250, 260) (420, 430) (520, 530) de l'élément de contenu (200) (400) (500) ;
dans lequel la première clé (310) (460) (560) est déchiffrable par une clé de déchiffrement comprise dans le dispositif utilisateur (100) (330) et la seconde clé (320) (470) (570) nécessite une clé de déchiffrement qui est comprise sur un serveur, et le déchiffrement de la seconde clé (320) (470) (570) nécessite une connexion au serveur, moyennant quoi une partie des au moins deux parties (250, 260) (420, 430) (520, 530) nécessitant un chiffrement par la seconde clé (320) (470) (570) peut ne pas être consommée tant qu'une connexion n'est pas établie avec le serveur.
